# EUROPEAN PATENT SPECIFICATION

(11) **EP 1 418 744 B1**
(45) Date of publication and mention of the grant of the patent: **27.07.2011**
(21) Application number: 03025478.3
(22) Date of filing: 06.11.2003
(51) Int. Cl.: H04N 1/00

(54) **Digital still camera, and control method and program of he same**
Digitale Standbildkamera und dessen Steuerungsverfahren und Programm
Caméra numérique à image fixe et méthode de contrôle et programme de celui-là

(30) Priority: 07.11.2002 JP 2002324351
(43) Date of publication of application: 12.05.2004
(60) Divisional application: 10013046.7
(73) Proprietor: Panasonic Corporation, Kadoma-shi Osaka 571-8501 (JP)
(72) Inventor: Takashima, Toru, Osaka 540-6207 (JP)
(74) Representative: Grünecker, Kinkeldey, Stockmair & Schwanhäusser Anwaltssozietät

(56) References cited:
- EP-A- 0 689 157
- JP-A- 10 224 719
- US-A- 6 023 585
- US-A1- 2001 001 563
- US-A1- 2002 036 695
- US-A1- 2002 089 592
- US-A1- 2002 093 583
- US-B1- 6 195 513
- US-B1- 6 344 875
- DATABASE WPI Section EI, Week 200249 Derwent Publications Ltd., London, GB; Class T01, AN 2002-461502 XP001091563 & TW 453 111 A (INVENTEC CORP) 1 September 2001 (2001-09-01)
- PATENT ABSTRACTS OF JAPAN vol. 1996, no. 06, 28 June 1996 (1996-06-28) & JP 08 032911 A (OLYMPUS OPTICAL CO LTD), 2 February 1996 (1996-02-02)

## Description

The present invention relates to a digital still camera, a control method and computer program.

A digital still camera (hereinafter referred to as DSC), when used to photograph images, is set to a record mode by a mode change switch, and when used to print recorded images, the record mode is switched to a playback mode and then the digital still camera is connected to a printer or a personal computer. That is, printing of recorded images requires troublesome operations of switching the mode change switch from the record mode to a transfer mode and subsequently connecting the DSC to an external device such as a printer. There is often the case that the connection is made with the external device leaving the mode change switch unchanged, which results in failure to print, arousing user's suspicion to malfunction of the DSC and thus making it difficult to use such DSC for users. In the above case, the connection with the external device needs to be once released, followed by switchover to the transfer mode for re-connection with the external device. In order to eliminate such troublesome operations of users, recently developed is a digital still camera that is shifted to a mode for transferring data to a personal computer concurrently with the connection therewith (e.g., see Japanese Patent Application Laid-Open No. 2001-238105).

Related prior art is disclosed in JP200117742 corresponding to US 2002/0171747 (published 21.11.2002). JP200117742 discloses an electronic camera and a method of controlling the display is disclosed.

Some DSCs are equipped with an electronic viewfinder (hereinafter referred to as an EVF) which allows users to visually recognize images to be recorded or already recorded images while viewing the EVF.

Also, a digital still camera directly connectable to a printer, when connected to a printer or a personal computer, provides an indication to distinguish between the printer and the personal computer, on a liquid crystal monitor (e.g. , see Japanese Patent Application Laid-Open No. 10-224719).

Furthermore, a DSC can display on the liquid crystal monitor, error information of a recording material in a printer if receiving that information (e.g., see Japanese Patent Application Laid-Open No. 10-229534).

Moreover, a DSC includes a memory card removable from the DSC body as a medium for storing recorded images, and is provided also with an openable/closable door at an insertion port of this memory card. This memory card records the recorded images and DPOF (Digital Print Order Format) data. For exchange of the memory card, a finished memory card is removed from the insertion port and a new memory card is inserted therein.

Furthermore, the memory card may be used as external storage by connecting the DSC with a personal computer, in which case image data is transferred from the personal computer to the memory card, and access information is displayed on display unit during the transfer to the memory card (e.g., see Japanese Patent Application Laid-Open No. 2001-211356).

When a user connects the DSC to the external device during photographing using a finder, he/she needs to perform some operations for data transfer in accordance with instructions displayed in the finder even when the record mode is switched to the transfer mode for preparation of data transfer to the external device. Such operations are burdensome for users.

Also, when connection is made with a printer or the like in a mode in which the EVF is active, users have difficulty in viewing print images and information displayed in the EVF in sequential printing, and when attempting to display the images and the like on the liquid crystal monitor, users have to change the mode to a liquid crystal monitor display mode, which is an inconvenient operation.

Furthermore, when the DSC is connected to a printer or a personal computer, the connection needs to be confirmed on the liquid crystal monitor and thereafter printing conditions and the like are to be set in the printer or personal computer, which is a troublesome operation.

Furthermore, an error and the like in the printer are displayed on the liquid crystal monitor, therefore users can recognize a print status. However there is still difficulty in recognizing which one of images in a printing process is involved in the error and the like. Particularly, images printed in a DPOF mode are automatically printed out according to the setting, but the print status is hardly recognizable by users. This means that users cannot recognize an image being currently printed, the number of printed sheets out of the total directive number of sheets to be printed, or the like. Also, a printer placed far from the DSC and a user causes inconvenience to the user.

Moreover, the memory card may be used with the door of a storage part opened, which may cause the failure in data transfer when the memory card is removed mistakenly during access of signals to the memory card.

In addition, the memory card inserted during communication with the external device such as a printer is not accessible. Therefore in order to transfer images from the exchanged memory card, a connection cable is once released from the connection and is again connected with the external device, which requires time disadvantageously.

Furthermore, when the DSC memory card is used as an external storage of a personal computer, image data directed from the personal computer to the DSC is transmitted by a data block, that is, discretely timed data blocks are transferred. In this case, during transfer of one data block, the DSC provides an indication of data writing as access information, whereas in an interval between the completion of the one data block transfer and the next data block transfer, that is, while an FAT is being written (approximately 10 to 20 seconds), the DSC does not provide the above indication. Therefore, there are some cases that users misconceive the data transfer to be done and thus release the connection between the DSC and the personal computer, leading to damages not only to image data but also to the memory card itself.

It is, therefore, an object of the present invention to provide a DSC which exhibits better operability when connected to an external device, and a program of-the DSC:

It is another object of the present invention to provide a DSC capable of reducing operations performed on the external device when the DSC is connected thereto, and a program of the DSC.

It is still another object of the present invention to provide a DSC capable of providing an indication of the progress of printing on a printer in a batch print mode such as a DPOF mode, and a program of the DSC.

It is still yet another object of the present invention to provide a DSC with lower possibility that connection with a personal computer is mistakenly released when discretely timed data blocks are transferred from the personal computer, and a program of the DSC.

The invention concerns a digital still camera according to claim 1, namely a digital camera comprising a connection a connection unit establishing connection with an external device; a display device allowing images to be recorded or already recorded images to be observed from outside;
a control unit configured as a controller having a plurality of modes including a transfer mode,
an electronic viewfinder allowing a user to view therethrough images to be recorded or already recorded images;
and characterized in further comprising a connection detection unit detecting that the connection unit is connected to the external device and that the connection is released; and
the controller shifting to the transfer mode, which allows to transmit image data to the external device when the connection detection unit detects the connection, as well as controlling the camera so that a display of the images is switched from the electronic viewfinder to the display device.

Embodiments, which are especially advantageously, are claimed in the dependant claims 2 and 3.

It is providing a special advantage, if an embodiment of the digital still camera is configured such, that the connection with the external device is established via a USB cable.

Further, it provides another special advantage, if an embodiment of a digital still camera configured such, that the external device includes a printer.

According to the present invention, a DSC which exhibits better operability when connected to an external device, a method and a program of the DSC can be provided.

The present invention concerns also a method of controlling a digital still camera with a display device and an electronic viewfinder comprising:
a connection detecting step (S101) of detecting that connection unit establishing connection with an external device is connected to the external device or that the connection is released;
a step (S102) of shifting from a plurality of modes to a transfer mode when the connection is detected in the connection detecting step; and
a step (S103) of transmitting image data to the external device after the shift to the transfer mode; whereby
the step (S102) of shifting from a plurality of modes to a transfer mode, when the connection is detected in the connection detecting step, further controlling such that display of images is switched from the electronic viewfinder to the display device, the electronic viewfinder allowing a user to view therethrough images to be recorded or already recorded images, the display device allowing the images to be recorded or the already recorded images to be observed from outside.

The invention also concerns a computer program comprising code means, which are adapted to perform the steps of the method according to the invention, when said program is run on a data processing system.
FIG. 1 is a schematic diagram showing a state that a DSC of the present invention is used;
FIG. 2 is a perspective view of the DSC according to the present invention;
FIG. 3 is a block diagram showing a constitution of the DSC according to the one embodiment of the present invention;
FIG. 4 (a) is a flowchart of an operation of the DSC according to the one embodiment of the present invention;
FIG. 4 (b) is a flowchart of an operation of the DSC according to the one embodiment of the present invention;
FIG. 5 is a circuit diagram partly showing a configuration of first controller of the DSC according to the one embodiment of the present invention; and
FIG. 6 is a block diagram partly showing a configuration of a DSC.

### Description of Symbols

1 Main body
2 Printer
3 USB cable
4 USB terminal insertion port
5 USB terminal

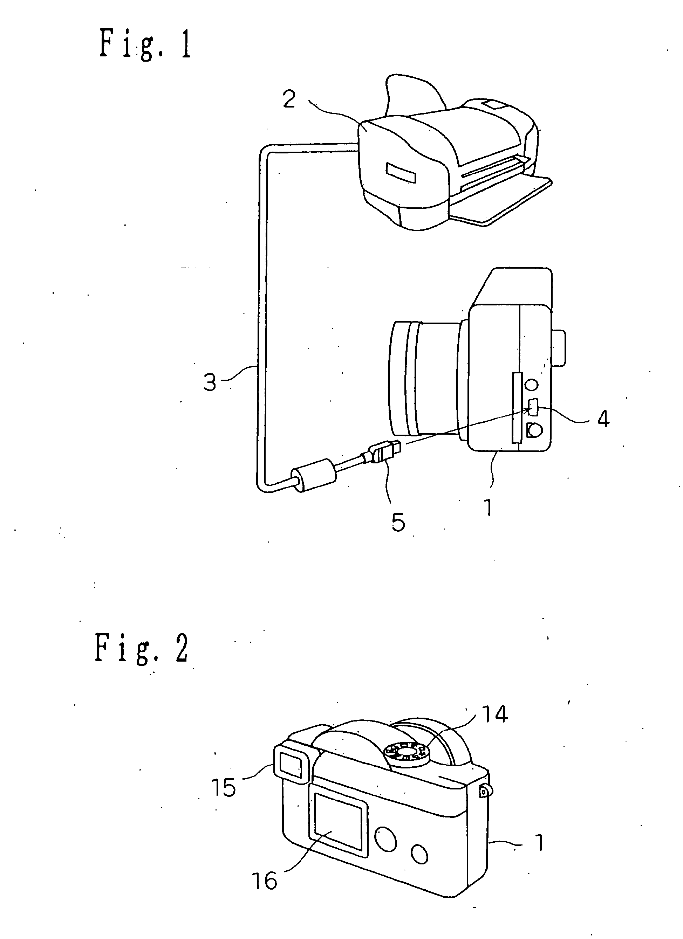

A digital still camera (hereinafter, referred to as a DSC) according to the embodiment of the present invention is described below with reference to the drawings. FIG. 1 is a perspective view showing a state that the DSC is used in the first embodiment of the present invention. A main body 1 of the DSC has a USB terminal insertion port 4 which is one example of connection unit of the present invention and which a USB terminal 5 is inserted into, so that the main body 1 is connected via a USB cable 3 with a printer 2 which is one example of an external device of the present invention. The USB terminal insertion port 4 is connected with connection detection unit (not shown), which allows the DSC in the present invention to detect the connection established with the printer 2 when the USB terminal 5 is inserted into the USE terminal insertion port 4.

FIG. 2 shows a rear perspective view of the DSC in the first embodiment. In an upper part of the main body 1, there is provided with a mode dial 14 for switching to a plurality of various modes such as a record mode and playback mode, which is one example of mode selection unit of the present invention. On the rear side of the main body 1 are equipped with an EVF 15 through which images to be recorded or already recorded images can be viewed, and a liquid crystal monitor 16 which allows those images to be observed from the outside and which is one example of a display device of the present invention.

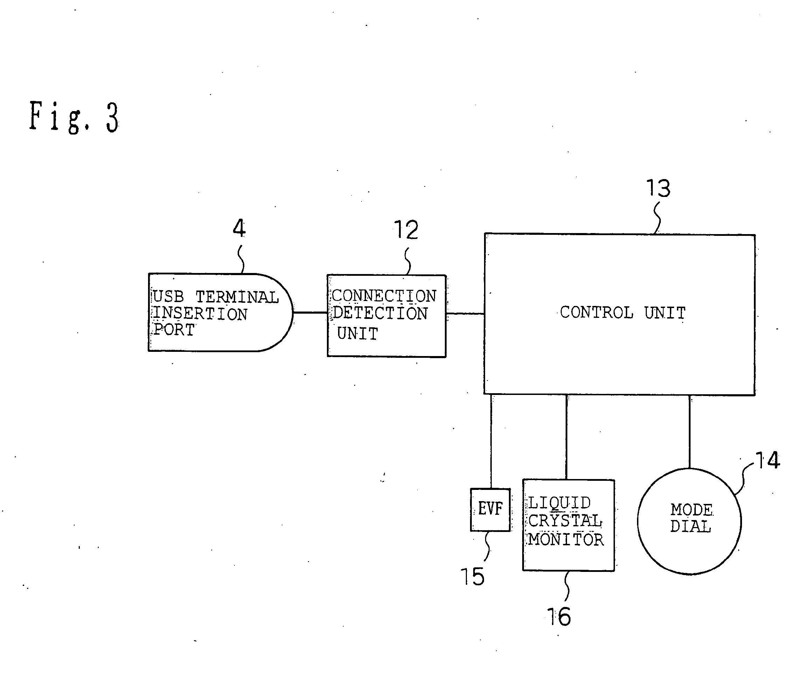

FIG. 3 is a block diagram showing a constitution of the DSC in the first embodiment. A control unit 13, which is one example of first controller of the present invention, is connected with connection detection unit 12, the USB terminal insertion port 4, the mode dial 14, the EVF 15 and the liquid crystal monitor 16. The connection detection unit 12 has a capability of detecting a connection state or a connection released state with a printer 2 connected to the USB terminal insertion port 4 by detecting a voltage applied from the printer 2. The control unit 13 has various types of modes such as a record mode and playback mode, and is operable to switch each mode and transmit image data to the printer 2 when connected thereto.

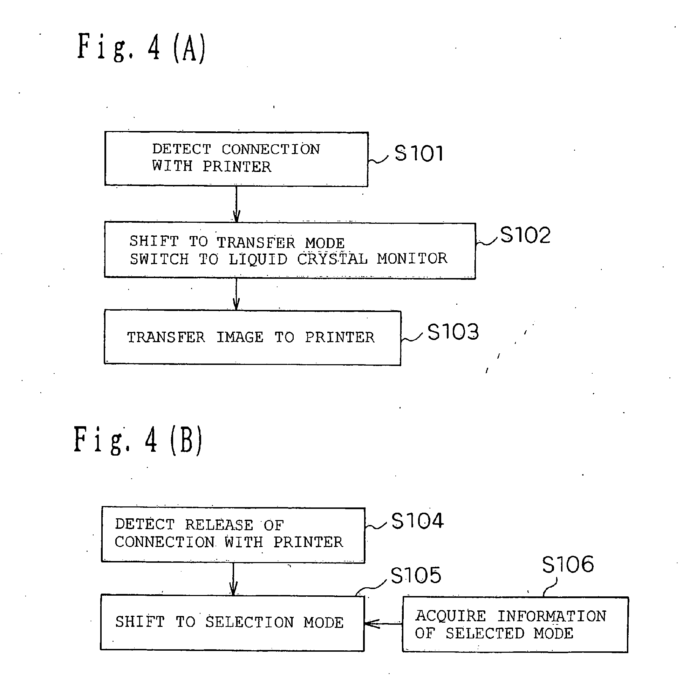

Next, an operation of the DSC having the above constitution in this embodiment will be described along the flowcharts shown in FIGS. 4(a) and 4(b). When the USE terminal 5 of the USB cable 3 connected to the printer 2 is inserted to the USB terminal insertion port 4, the connection detection unit 12 detects a voltage applied from the printer 2 and thereby detects that the DSC is being connected with the printer 2 (step S101). Data obtained from the connection detection unit 12 is transmitted to the control unit 13 which then switches from a mode set by the mode dial 14 to the transfer mode (step S102).

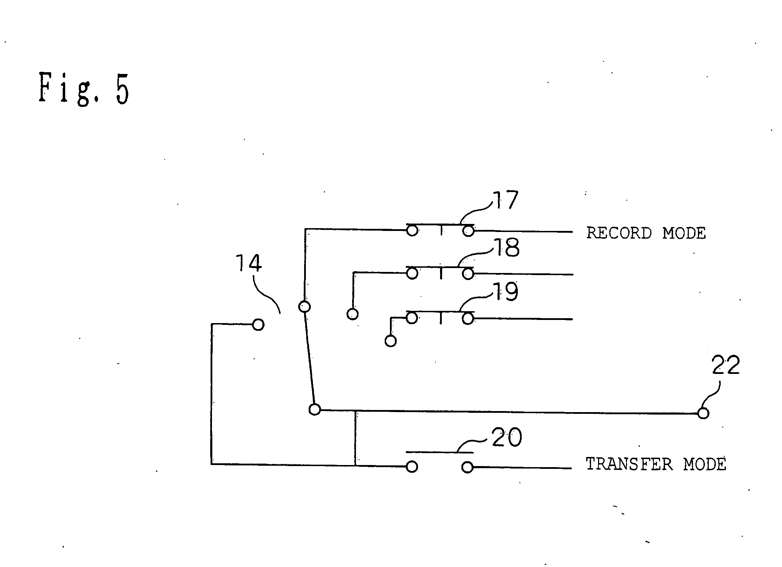

FIG. 5 is a diagram showing a switching operation to the transfer mode in the control unit 13. The mode dial 14 is a switch allowing the selection among various modes such as the record mode, playback mode and transfer mode. The terminal 22 is operable to transmit signals from the selected mode. Contacts 17, 18, and 19 represent b-contact switches, and a contact 20 represents an a-contact switch. The contacts 17, 18 and 19 operate together with the contact 20. Now assuming that the record mode is selected, the contact 17 is closed while the contact 20 is opened, and a record mode line is connected to the terminal 22 via the contact 17 and the mode dial 14.

Upon receipt of information from the connection detection unit 12 indicating that the connection is established with the external device, the control unit 13 opens the contact 17 and closes the contact 20. Through this operation, the control unit 13 opens the record mode line to connect the transfer mode line to the terminal 22 even when the mode dial 14 is set to the record mode.

When ascertaining that the terminal 22 is connected to the transfer mode line, the control unit 13 shifts from the record mode to the transfer mode, followed by the control for transmitting image data to the printer 2 (step S103).

Accordingly, when the DSC in the first embodiment is connected to the printer 2 with the mode dial 14 being on the record mode, the internal control unit 13 can switch a mode from the record mode to the transfer mode, which allows users to transmit images to the printer 2 even when they forget to change the setting of the mode dial 14, so that an easy-to-use DSC can be provided.

The above description has dealt with the case that the external device of the present invention is the printer 2, however, it may alternatively be a personal computer, a portable telephone or other devices.

Also, it is described that the connection detection unit of the present invention has the capability of detecting a connection state with the external device such as the printer 2 connected to the USB terminal insertion port 4 by detecting the voltage applied from the external device, however, the connection detection unit of the present invention may take any constitution enabling the detection of connection with the external device by means of techniques other than the above, such as a constitution in which the connection of the cable induces opening/closing of the contacts.

Furthermore, according to the above description, even when the mode dial 14 is set to the record mode, it is automatically switched to the transfer mode upon the detection of connection established with the external device, however, the mode dial 14 even set to other modes is also switched to the transfer mode when connection with the external device is detected.

Moreover, the constitution and operation have been described in which the connection detection unit of the present invention detects that the connection is established with the external device, followed by automatic shifting from the mode set by the mode dial 14 to the transfer mode, however, there are another conceivable constitution and operation such that the connection detection unit detects a release of the connection with the external device when the connection is released therefrom.

In this case, as shown in FIG. 4 (b), it may only be constituted so as to automatically return to the mode previously set by the mode dial 14 (step S105) after the detection of release of connection with the external device by the connection detection unit 12 (step S104) . For example, in the circuit shown in FIG. 5, when the mode dial 14 is originally set to the record mode (step S106), the contact 20 is opened and the contact 17 is closed in response to the detection of release of connection with the external device by the connection detection unit 12, and thereby the record mode line is connected to the terminal 22 in place of the transfer mode. Therefore, while the connection detection unit 22 are detecting that the connection is being established with the external device, the control unit 13 operates in the transfer mode whichever mode is selected by the mode dial 14, whereas when the connection detection unit 12 detects that the connection with the external device is released, the control unit 13 operates in a mode being set by the mode dial 14 at that point. This means that the mode dial 14 is changeable while the connection is being established with the external device, allowing users to select beforehand a mode to be used after releasing the connection from the external device.

When the recorded image is displayed in the EVF, the control unit 13 may switch such image display from the EVF to the liquid crystal monitor 16 which is one example of display unit of the present invention (step S102) . This allows users to confirm images to be transmitted to the external device on the liquid crystal monitor screen without looking into the EVF, so that further easy-to-use DSC can be provided.

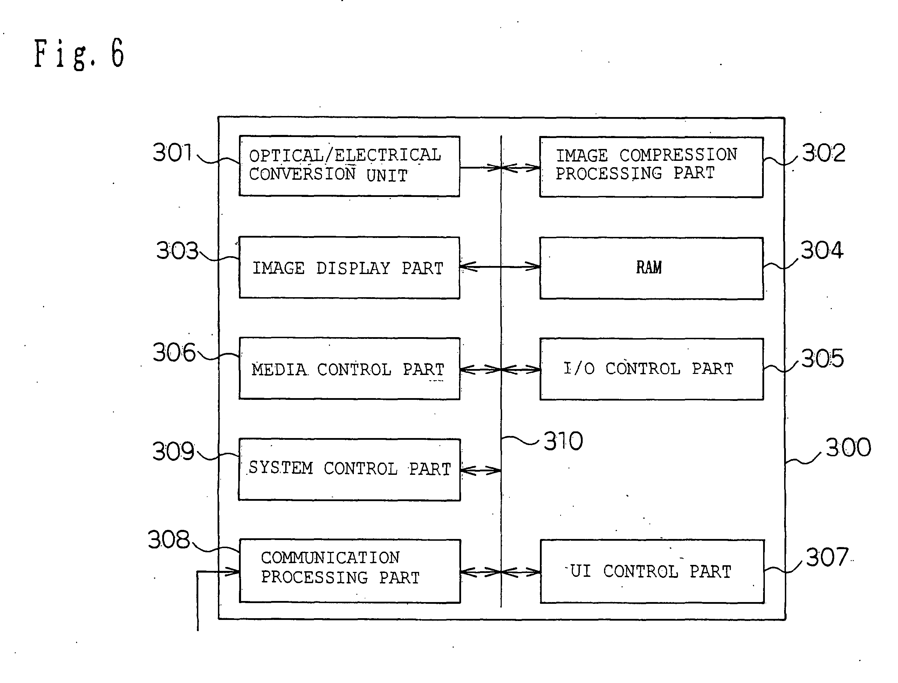

FIG. 6 is a block diagram showing a general configuration of the DSC. Note here that the control unit 13 may comprise a UI control part 307 operable to recognize the mode switchover of the mode dial 14, a system control part 309 for controlling the entire operation of the DSC, such as processing for mode setting, which are shown as an example in FIG. 5, and that the connection detection unit 12 may comprise, for example, an I/O control part 305, or the like.

Although a part of the control unit 13 comprises the circuits shown in FIG. 5 according to the above description, any circuit other than that shown in FIG. 5 is also allowable if it is operable in the same manner, and the control unit 13 may be composed on a software basis, not composed of hardware circuits.

Also, the above description is about the constitution in which the control unit 13 switches to the transfer mode when the USB terminal 5 is inserted into the USB terminal insertion port 4, however, it is also allowable to constitute so that the control unit 13 further has a playback mode whereby it switches to the playback mode when the USB terminal 5 is inserted into the USB terminal insertion port 4. Note here that the playback mode refers to an operation mode used to display recorded image data. In this case, the transfer mode of the present invention corresponds to an integrated mode combining the transfer mode and the playback mode together as a single operation mode. Or alternatively, the transfer mode of the present invention may be a mode combining the transfer mode and the record mode together as a single operation mode.

In the embodiment described so far, the connection unit is the USB terminal insertion port 4 for the USB cable 3, however, other types of cables may be available to the terminal insertion port. Also, the connection unit is not necessarily be the terminal insertion port and any type of connection unit is allowable if it is connectable with a cable.

In the embodiment described above, the display unit is not limited to the liquid crystal monitor 16, and it may alternatively be other types of monitors such as an EL monitor.

Furthermore, in the aforementioned embodiment, it is conceivable that the external device of the present invention is connected in a wireless manner, not in a cabled manner. In this case, the connection unit of the present invention may have a constitution of detecting a connection state of the external device by receiving a signal indicating that the connection is established with the external device.

Moreover, the portable storage unit of the present invention is not limited to a memory card, and any type of storage unit is available.

Moreover, in the embodiment described so far, a program according to the present invention makes a computer execute a part or all of the functions of the first, second, third, fourth, fifth, and sixth controller in the above-mentioned DSC of the present invention, and is operable in cooperation with the computer.

Also, a medium according to the present invention is the one having stored therein a program making a computer execute a part or all of the functions of the first, second, third, fourth, fifth, and sixth controller in the above-mentioned DSC of the present invention, and is readable by the computer as well as utilized when the program read by the computer operates in cooperation with the computer.

As one utilization form of the program of the present invention, it is also allowable that the program is recorded onto a computer-readable recording medium so that the program may operate in cooperation with the computer.

As another utilization form of the program in the present invention, it is also allowable that the program is transmitted through a transmission medium so that the program may operate in cooperation with the computer.

The recording medium includes a ROM and the like, and the transmission medium includes the Internet and the like, and light, radio wave, sound wave.

The computer of the present invention described above is not limited to simple hardware such as a CPU, and may include firmware, an operating system, and peripheral devices.

It is to be understood that, as described above, the constitution of the present invention may be implemented on a software basis or hardware basis.

According to a digital still camera, and a control method and program of the same in the present invention, the operability of a digital still camera when connected to an external device is enhanced, therefore the present invention is useful for the digital still camera, and the like.

## Claims

1. A digital still camera comprising:
a connection unit (3) establishing connection with an external device;
a display device (16) allowing images to be recorded or already recorded images to be observed from outside;
a control unit (13; 23; 33; 43; 53; 63) configured as a controller having a plurality of modes including a transfer mode,
an electronic viewfinder (15) allowing a user to view therethrough images to be recorded or already recorded images;
and **characterized in** further comprising a connection detection unit (12) detecting that the connection unit is connected to the external device and that the connection is released; and
the controller shifting to the transfer mode, which allows to transmit image data to the external device when the connection detection unit (12) detects the connection, as well as controlling the camera so that a display of the images is switched from the electronic viewfinder to the display device (16).

2. The digital still camera according to claim 1, wherein the connection with the external device is established via a USB cable (3).

3. The digital still camera according to claim 1 or 2, wherein the external device includes a printer (2).

4. A method of controlling a digital still camera with a display device (16) and an electronic viewfinder (15) comprising:
a connection detecting step (S101) of detecting that connection unit establishing connection with an external device is connected to the external device or that the connection is released;
a step (S102) of shifting from a plurality of modes to a transfer mode when the connection is detected in the connection detecting step; and
a step (S103) of transmitting image data to the external device after the shift to the transfer mode; whereby
the step (S102) of shifting from a plurality of modes to a transfer mode, when the connection is detected in the connection detecting step, further controlling such that display of images is switched from the electronic viewfinder (15) to the display device (16), the electronic viewfinder (15) allowing a user to view therethrough images to be recorded or already recorded images, the display device (16) allowing the images to be recorded or the already recorded images to be observed from outside.

5. A computer program comprising code means **characterized in** being adapted to perform the steps of the method according to claim 4 when said program is run on a data processing system.

## Patentansprüche

1. Digitale Standbildkamera, die umfasst:
eine Verbindungseinheit (3), die Verbindung mit einer externen Vorrichtung herstellt;
eine Anzeigevorrichtung (16), die es ermöglicht, aufzuzeichnende Bilder und bereits aufgezeichnete Bilder von außen zu betrachten; und
eine Steuereinheit (13; 23; 33; 43; 53; 63), die als eine Steuereinrichtung mit einer Vielzahl von Betriebsarten einschließlich einer Übertragungs-Betriebsart konfiguriert ist,
einen elektronischen Sucher (15), der es einem Benutzer ermöglicht, aufzuzeichnende Bilder oder bereits aufgezeichnete Bilder durch ihn hindurch anzusehen; und
**dadurch gekennzeichnet, dass** sie des Weiteren eine Verbindungs-Erfassungseinheit (12) umfasst, die erfasst, dass die Verbindungseinheit mit der externen Vorrichtung verbunden ist, und dass die Verbindung getrennt ist; und
dass die Steuereinrichtung zu der Übertragungs-Betriebsart wechselt, die es ermöglicht, Bilddaten zu der externen Vorrichtung zu senden, wenn die Verbindungs-Erfassungseinheit (12) die Verbindung erfasst, und die Kamera so steuert, dass eine Anzeige der Bilder von dem elektronischen Sucher auf die Anzeigevorrichtung (16) umgeschaltet wird.

2. Digitale Standbildkamera nach Anspruch 1, wobei die Verbindung mit der externen Vorrichtung über ein USB-Kabel (3) hergestellt wird.

3. Digitale Standbildkamera nach Anspruch 1 oder 2, wobei die externe Vorrichtung einen Drucker (2) enthält.

4. Verfahren zum Steuern einer digitalen Standbildkamera mit einer Anzeigevorrichtung (16) und einem elektronischer Sucher (15), das umfasst:
einen Verbindungs-Erfassungsschritt (S101), in dem erfasst wird, dass eine Verbindungseinheit, die Verbindung mit einer externen Vorrichtung herstellt, mit der externen Vorrichtung verbunden ist oder dass die Verbindung getrennt ist;
einen Schritt (S102), in dem von einer Vielzahl von Betriebsarten zu einer Übertragungs-Betriebsart gewechselt wird, wenn in dem Verbindungs-Erfassungsschritt die Verbindung erfasst wird; und
einen Schritt (S103), in dem nach dem Wechsel zu der Übertragungs-Betriebsart Bilddaten gesendet werden; wobei
der Schritt (S102), in dem von einer Vielzahl von Betriebsarten zu einer Übertragungs-Betriebsart gewechselt wird, wenn in dem Verbindungs-Erfassungsschritt die Verbindung erfasst wird, des Weiteren so gesteuert wird, dass die Anzeige von Bildern von dem elektronischen Sucher (15) auf die Anzeigevorrichtung (16) umgeschaltet wird, wobei es der elektronische Sucher (15) einem Benutzer ermöglicht, aufzuzeichnende Bilder oder bereits aufgezeichnete Bilder durch ihn hindurch anzusehen, und es die Anzeigevorrichtung (16) ermöglicht, die aufzuzeichnenden Bilder oder die bereits aufgezeichneten Bilder von außen zu betrachten.

5. Computerprogramm, das Code-Mittel umfasst, **dadurch gekennzeichnet, dass** es so eingerichtet ist, dass die Schritte des Verfahrens nach Anspruch 4 durchgeführt werden, wenn das Programm auf einem Datenverarbeitungssystem ausgeführt wird.

## Revendications

1. Appareil de prise de vues d'images fixes comprenant :
une unité de connexion (3) établissant une connexion avec un dispositif externe,
un dispositif d'affichage (16) permettant d'enregistrer des images ou d'observer des images déjà enregistrées depuis l'extérieur,
une unité de commande (13, 23, 33, 43, 53, 63) configurée comme un contrôleur possédant une pluralité de modes, y compris un mode de transfert,
un viseur électronique (15) permettant à l'utilisateur de visualiser à travers lui des images à enregistrer ou des images déjà enregistrées,
et **caractérisé en ce qu'**il comprend en outre une unité de détection de connexion (12) détectant que l'unité de connexion est reliée au dispositif externe et que la connexion est libérée, et
le contrôleur basculant vers le mode de transfert, ce qui permet de transmettre des données d'image au dispositif externe lorsque l'unité de détection de connexion (12) détecte la connexion, tout comme commandant l'appareil de prise de vues de telle sorte qu'un affichage des images bascule depuis le viseur électronique vers le dispositif d'affichage (16).

2. Appareil de prise de vues d'images fixes selon la revendication 1, dans lequel la connexion avec le dispositif externe est établie par l'intermédiaire d'un câble USB (3).

3. Appareil de prise de vues d'images fixes selon la revendication 1 ou 2, dans lequel le dispositif externe inclut une imprimante (2).

4. Procédé de commande d'un appareil de prise de vues d'images fixes comportant un dispositif d'affichage (16) et un viseur électronique (15) comprenant :
une étape de détection de connexion (S101) consistant à détecter que l'unité de connexion établissant une connexion avec un dispositif externe est reliée au dispositif externe ou que la connexion est libérée,
une étape (S102) consistant à effectuer un basculement depuis une pluralité de modes jusqu'à un mode de transfert lorsque la connexion est détectée lors de l'étape de détection de connexion, et
une étape (S103) consistant à transmettre des données d'image vers le dispositif externe après le basculement vers le mode de transfert, grâce à laquelle l'étape (S102) de basculement depuis une pluralité de modes jusqu'à un mode de transfert, lorsque la connexion est détectée lors de l'étape de détection de connexion,
effectue en outre une commande telle que l'affichage d'images est basculé depuis le viseur électronique (15) vers le dispositif d'affichage (16), le viseur électronique (15) permettant à un utilisateur de visualiser à travers lui des images enregistrées ou des images déjà enregistrées, le dispositif d'affichage (16) permettant d'enregistrer les images ou d'observer les images déjà enregistrées depuis l'extérieur.

5. Programme informatique comprenant un code **caractérisé en ce qu'**il est conçu pour effectuer les étapes du procédé conformes à la revendication 4 lorsque l'on exécute ledit programme sur un système de traitement de données.
